# EUROPEAN PATENT SPECIFICATION

(11) **EP 1 732 982 B1**
(45) Date of publication and mention of the grant of the patent: **10.09.2008**
(21) Application number: 05717116.7
(22) Date of filing: 21.03.2005
(51) Int. Cl.: C08L 53/02, C08L 23/26, C08L 23/00, C09D 153/02, B29C 70/00

(54) **HYDROGENATED STYRENIC BLOCK COPOLYMER COMPOSITIONS WITH IMPROVED HIGH TEMPERATURE OVERMOLDING PROPERTIES**
HYDRIERTES VINYLAROMATENBLOCKCOPOLYMER ENTHALTENDE ZUSAMMENSETZUNGEN MIT VERBESSERTEN HOCHTEMPERATURÜBERFORMUNGSEIGENSCHAFTEN
COMPOSITIONS DE COPOLYMERE BLOC HYDROGENE A BASE DE STYRENE HYDROGENE A PROPRIETES AMELIOREES DE SURMOULAGE A HAUTE TEMPERATURE

(30) Priority: 31.03.2004 EP 04101329
(43) Date of publication of application: 20.12.2006
(73) Proprietor: KRATON Polymers Research B.V., 1030 BH Amsterdam (NL)
(72) Inventor: MARIS, Catherine A.L., 1348 Louvain-La-Neuve (BE); COIGNOUL, Emmanuelle, KRATON Polymers Research S.A, 1348 Ottignies-Louvain-La-Neuve (BE)
(74) Representative: Kortekaas, Marcel C.J.A.
(86) International application number: PCT/EP2005/051300
(87) International publication number: WO 2005/095511

(56) References cited:
- EP-A- 0 955 329
- EP-A- 1 365 180
- EP-A- 1 384 768
- DE-A1- 19 745 700
- US-A- 4 486 469
- US-A- 5 723 543
- US-A1- 2001 018 490

## Description

### Technical Field

The present invention relates to hydrogenated styrenic block copolymer compositions with improved high temperature overmolding properties when applied onto polar substrates. More in particular the invention relates to styrenic block copolymer compositions combining improved cohesive failure properties in combination with improved compression set properties.

### Background Art

Compositions comprising a hydrogenated styrenic block copolymer composition and a functionalized polyolefin are known. For instance, EP 1365180--. describes a composition for a gasket, wherein the block copolymer is SEPTON^{™} 4077 (SEPS polymer) and the functionalized polyolefin is either a branched, random ethylene methacrylate acid copolymer (NUCREL^{™}) or a maleic anhydride modified low molecular weight polypropylene (both of relatively high functionality). The compositions described in this reference contain 150 parts by weight of a plasticizer, and would therefore not be of interest for overmolding in the automotive area where good high temperature properties are required.

The same inventors described in US 2001018490 --. a resin composition which is excellent in rubber elasticity, oil maintainability and adhesivity to a metal, and comprises a thermoplastic elastomer composition comprising a (al) hydrogenated block copolymer which is obtained by hydrogenating a block copolymer consisting essentially of a polymer block composed principally of a vinyl aromatic compound and a polymer block composed principally of a conjugated diene compound, which has a weight average molecular weight of at least 200,000, in which the polymer block composed principally of a vinyl aromatic compound is polystyrene, and in which the content by weight of the polystyrene moiety contained in the hydrogenated block copolymer is 20 to 40% ; a (b1) non-aromatic rubber-softening agent having a kinematic viscosity at 40 DEG C. of at least 300 mm2s-1; and a (c1) modified polyolefinic resin, the resin composition having a hardness according to JIS K6253 of at most 50 degrees and a compression set according to JIS K6262 of at most 50% ; a composite molded body of a metal and the thermo-plastic elastomer composition such as a gasket integrated with a metallic sheet; and processes for producing the above products. The MFR of the polyolefin resin (c1) is not specified in the examples, but the specification [0061] suggests the use of a copolymer having an MFR close to 0.5 g/10 minutes.

From EP 0955329 A --. a method is known for enabling the formation of a high damping, soft polymer gel. The method includes: reacting a poly(alkenyl benzene-co-maleimide) polymer with a maleated polyalkylene and a maleated hydrogenated block copolymer and an alkyl diamine grafting agent under substantially dry conditions sufficient to form a hydrogenated block copolymer-polyalkylene grafted poly(alkenyl benzene-co-maleimide) polymer product; and, dispersing the hydrogenated block copolymer-polyalkylene grafted poly(alkenyl benzene-co-maleimide) polymer product with an extender oil sufficient to form the gel. The present invention also contemplates a polymer gel composition, a polymer composition and an article manufactured from the polymer gel composition. Overmolding as such is not discussed. Some of the compositions disclosed in this reference employ EXXELOR^{™} PO 1015, a maleic anhydride functionalized polypropylene copolymer having a relatively low MA level (typically in the range of 0.25 to 0.5 wt%).

A method of making a composite structure is known from US 4486469 --. - Thus, various blends of a graft copolymer with mixtures of elastomers are disclosed.

Note that such composite structures are different from products such as disclosed in EP 1384768 --. which concerns a solvent free, hot melt adhesive composition to be used for bonding a polar leather layer to a non-polar substrate. An adhesive composition is generally not suitable for overmolding.

Thermoplastic elastomer compositions for overmolding on polar substrates such as polyesters and polyamides are known. Examples of such compositions may be found in e.g., US 5723543 --. EP 0832931 --. EP 0718347 --. , or US 5750268 --. . More recently, systems have been developed on the bases of functionalized hydrogenated styrenic block copolymers, as described in EP 0771846 --.

Hydrogenated styrenic block copolymers, such as the KRATON^{®} G polymers, and functionalized hydrogenated styrenic block copolymers, such as the KRATON^{®} FG polymers, and compositions based thereon are highly suitable for overmolding applications and offer, amongst other features, extremely good grip. Polyamide 6 (PA-6) is extensively used in industrial applications. Formulations have been successfully developed for this substrate, offering a good balance of mechanical properties. However, high temperature performance is lacking.

The automotive area is an important outlet for PA polymers and requires good high temperature properties. It would therefore be desirable to have a composition for overmolding onto e.g. PA-6 with a suitable balance of properties, i.e., a Shore A hardness of 40 to 80 (ISO 868), adhesion values for 2 mm thick plates above 10 N (Renault D41 1916 test on a Zwick mechanical tester), compression set below 40% (ISO 815; at 70°C after 24 hours) and still adhering to the substrate after aging at 70°C.

It is an object of the present invention to provide compositions combining these properties.

### Disclosure of Invention

Accordingly a composition is provided which can be used for overmolding onto a polar substrate, comprising:
a) 100 parts by weight (pbw) of a hydrogenated styrenic block copolymer having at least two resinous endblocks of polymerized monovinyl arene and an elastomeric midblock comprizing polymerized and subsequently hydrogenated conjugated diene or dienes,
b) from 25 to 60 pbw of a functionalized polyolefin, and optionally
c) from 0 to 100 pbw of a plasticizer,
d) from 0 to 200 pbw of one or more fillers and filler deactivators, and
e) from 0 to 2 pbw of antioxidants,
f) from 0 to 100 pbw of a polar engineering thermoplast,
wherein component (a) is a linear hydrogenated styrenic block copolymer having an apparent molecular weight in the range of from 200,000 to 500,000 or a radial hydrogenated styrenic block copolymer having an apparent molecular weight in the range of from n times 100,000 to 250,000, n equals the number of polymer arms, and component (a) has a content of hydrogenated, 1,2-polymerized conjugated dienes (vinyl content) of greater than 40% and a content of poly(monovinyl arene) in the range of from 20 to 50%, and component (b) is an acid, anhydride or ester functionalized polyolefin having a level of functionality of 0.1 to 5 %w and a melt flow rate (MFR, ASTM D 1238-95, Condition L) equal to or greater than 20 g/10 minutes.

It will be appreciated that another aspect of the invention is formed by overmolded articles (sometimes referred to as composite materials) comprising the above composition molded onto a polar substrate, in particular polyamide, more particularly PA-6.

### Mode for the Invention

Hydrogenated styrenic block copolymers are known in the art. By styrenic block copolymer is meant a block copolymer having at least two end-blocks A made of polymerized monovinyl arene, thus giving a glassy, (resinous) aromatic segment, and a mid-block B made up at least 50% of polymerized diene, thus giving an amorphous elastomeric segment. The polymers can be linear, as in A-B-A and A-B-A-B, but also radial, such as in (A-B)ₙX, or mixtures thereof. Some A-B diblock polymer can be present up to an amount of 30% by weight or less. Generally, 20% by weight percent or less of the block copolymer is diblock, and it is preferred to have essentially no diblock. In the above radial formula the n is an integer of at least 3, generally 3 to 50, more generally 6 to 13, and the X is the remnant of a coupling agent or multifunctional monomer such as divinylbenzene.

The A-B-A compositions can be made by either sequential polymerization or coupling. In the sequential polymerization technique, the monovinyl arene is first introduced to produce an aromatic block followed by the introduction of the conj ugated diene to produce the rubbery midblock followed by additional monovinyl arene to produce the other terminal aromatic block. This is broadly disclosed in US 5723543 --.
. The production of such polymers and also radial polymers is broadly disclosed in EP 0832931 --.
. Another patent broadly disclosing the anionic polymerization of thermoplastic elastomers using an organo alkali metal initiator is EP 0718347 --.
.

The aromatic component can be any 8-30 carbon atom monoalkenyl aromatic compound or mixture thereof, such as styrene and substituted styrenes such as alphamethyl-styrene and 1,1-diphenyl-ethene, but preferably is styrene.

The diene can be any 4 to 8 carbon atom conjugated diene or mixtures thereof but is preferably 1,3-butadiene or isoprene, most preferably 1,3-butadiene.

When the diene is butadiene the polymerization may be carried out using a polar compound as is known in the art to give increased levels of vinyl.

It is well known in the art to drive the polymerization toward the 1,2-addition of butadiene. Broadly, this can be done by utilizing an organic polar compound such as an ether, including cyclic ethers, polyethers and thioethers or an amine including secondary and tertiary amines. Preferred are chelating ethers and amines. By chelating ether is meant an ether having more than one oxygen as exemplified by the formula R(OR')ₘ (OR")ₒ OR where each R is individually selected from 1 to 8, preferably 2 to 3, carbon atom alkyl radicals; R' and R" are individually selected from 1 to 6, preferably 2 to 3, carbon atom alkylene radicals; and m and o are independently selected integers of 1-3, preferably 1-2. One of m or o can be zero. Examples of preferred ethers include diethoxypropane, 1,2-dioxyethane (dioxo) and 1,2-dimethyoxyethane (glyme). Other suitable materials include CH₃-OCH₂-CH₂-OCH₂-CH₂-OCH₃ (diglyme) and CH₃ CH₂-OCH₂-CH₂-OCH₂-CH₂-OCH₂-CH₃ By chelating amine is meant an amine having more than 1 nitrogen such as N,N,N',N'-tetramethylethylene diamine. Monoamines are operable but less preferred. Less preferred also (but still operable) are straight chain and cyclic monoethers such as dimethylether, diethylether, anisole, and tetrahydrofuran.

This microstructure promoter is used in an amount of at least 0.1 moles per mole of organo alkalimetal initiator, such as an organolithium initiator, preferably 1-50, more preferably 2-25, moles of promoter per mole of the initiator. Alternatively, the concentration can be expressed in parts per million by weight based on the total weight of solvent and monomer. Based on this criteria from 10 parts per million to about 1 weight percent, preferably 100 parts per million to 2000 parts per million are used. This can vary widely, however, since extremely small amounts of some of the preferred promoters are very effective. At the other extreme, particularly with less effective promoters, the promoter itself can be the solvent. Again, these techniques are well known in the art, disclosed for instance in
US 5750268 --.
,
EP 0771846 --.
and
US 5723543 --.

The resulting 1,2-vinyl content for the polymers useful in this invention is at least 40 mole percent, preferably at most 90, more preferably at least 50, even more preferably 65-90, most preferably 65-80 mole percent.

The styrenic block copolymer as it is actually used in this invention is hydrogenated and hence there is little or no vinyl unsaturation left. Nonetheless, it is still a high 1,2 addition polymer (from a high vinyl precursor). Even the hydrogenated product is typically referred to as "high vinyl" because of its origin.

The styrenic block copolymers utilized in the compositions of this invention are saturated polymers in the sense that they contain little or no aliphatic unsaturation. Generally, the styrenic block copolymers as produced contain aliphatic unsaturation and are selectively hydrogenated so as to remove most of the aliphatic unsaturation in the polymer backbone. By selective hydrogenation is meant that the aliphatic unsaturation is significantly removed while leaving unaffected most of the aromatic unsaturation. Suitable known catalysts for accomplishing this include nickel compounds in combination with a reducing agent such as an aluminum alkyl. Hydrogenation is taught in
EP 0832931 --.
,
EP 0718347 --.
,
US 5750268 --.
and
EP 0771846 --.

Each individual aromatic endblock must have a molecular weight of less than 20,000. Preferably the endblocks have a molecular weight within the range of 5,000 to 20,000, most preferably 5,000 to 15,000.

The molecular weight of the copolymer will generally be at least 200,000. For linear A-B-A polymers, the molecular weight will generally be within the range of 200,000 to 500,000. Actually, the upper limit is dictated by viscosity considerations and can be as high as can be tolerated and still be processable. The most preferred molecular weight for linear A-B-A polymers is 250,000 to 350,000. With radial polymers, the molecular weight can be much higher since these polymers have a lower viscosity for a given total molecular weight. In general, it is easier to refer to the molecular weight of the arms, which will be half of the molecular weight discussed for linear A-B-A discussed above. Thus, for radial polymers having about 4 arms, the molecular weight generally will be in the range of 400,000 to 1 million, preferably 500,000 to 700,000. These polymers are generally referred to as high MW polymers.

For the composition of the invention, the nature of the monomers or the linearity is not a very determining factor. What is important is that a polymer is used having a relatively high molecular weight in combination with a relatively high vinyl content (.e.g., the percentage of conjugated butadiene built into the polymer backbone by 1,2-addition rather than 1,4-addition, or similar in case of a higher conjugated diene), and a content of poly(monovinyl arene) in the range of from 20 to 50%.

The apparent molecular weights of the complete block copolymers and each of the intermediate precursors have been determined by Gel Permeation Chromatography, and expressed in terms of standard poly(styrene) (analogous to the method described in ASTM D5296-97).

Block copolymers utilized in this invention, which are hydrogenated to remove the aliphatic unsaturation as noted hereinabove, can be viewed for instance in the case of butadiene as S-EB-S polymers, the S referring to the monovinyl arene, generally styrene, endblocks. The EB represents ethylene/butylene which is the structure resulting from the hydrogenation of polymerized 1,3-butadiene. With isoprene the designation would be S-EP-S, the EP representing ethylene/propylene.

Such copolymers are commercially available as, for instance, KRATON^{®} G polymers.

Component (b)

The functionalized polyolefins can be homopolymers of alpha-olefins such as ethylene, propylene, 1-butene, 1-hexene, and 4-methyl-1-pentene, and copolymers of ethylene with one or more alpha-olefins. Preferable among the polyolefins are low-density polyethylene, linear low-density polyethylene, medium- and high-density polyethylene, polypropylene, and propylene-ethylene random or block copolymers.

The functionalized polyolefins contain one or more functional groups which have been incorporated during polymerization. However they are preferably polymers onto which the functional groups have been grafted. Such functional group-forming monomers are preferably carboxylic acids, dicarboxylic acids or their derivatives such as their anhydrides.

Examples of the unsaturated carboxylic acids, dicarboxylic acids which may be present in the functionalized polyolefin are those having about 3 to about 20 carbon atoms per molecule such as acrylic acid, methacrylic acid, maleic acid, fumaric acid and itaconic acid.

Unsaturated dicarboxylic acids having from 4 to 10 carbon atoms per molecule are the especially preferred grafting monomers, as are the anhydrides of said acids. These grafting monomers include for example, maleic acid, fumaric acid, itaconic acid, citraconic acid, cyclohex-4-ene-1,2-dicarboxylic acid, bicycle[2.2.1] hept-5-ene-2,3-dicarboxylic acid, maleic anhydride, itaconic anhydride, citraconic anhydride, allylsuccinic anhydride, 4-methylcyclohex-4-ene-1,2-dicarboxylic anhydride and bicycle[2.2.1]hept-5-ene-2,3-dicarboxylic anhydride.

Further grafting monomers are epoxy-group containing esters of unsaturated carboxylic acids containing at least about 6, preferably about 7 carbon atoms. Particularly preferred are glycidyl acrylate and glycidyl methacrylate.

Various known methods can be used to graft the grafting monomer to the basic polymer. For example, this can be achieved by heating the polymer and the grafting monomer at high temperatures of from 150 to 300 °C in the presence or absence of a solvent with or without a radical initiator. Another vinyl monomer may be present during the grafting reaction. Suitable solvents that may be used in this reaction include benzene, toluene, xylene, chlorobenzene and cumene. Suitable radical initiators that may be used include t-butyl hydroperoxide, diisopropylbenzene hydroperoxide, dit-butyl peroxide, t-butyl cumyl peroxide, acetyl peroxide, benzoyl peroxide, isobutyryl peroxide and methyl ethyl ketone peroxide.

In the functionalized polyolefin thus obtained, the amount of the acid or anhydride is preferably from 0.2 to 5 %, more preferably from 0.5 to 4% by weight, based on the weight of the functional polyolefin.

These functionalized polyolefins have a melt flow rate equal to or greater than 20 g/10 minutes. More preferably, these functionalized polyolefins have a MFR of from 35 to 300 g/10 minutes, most preferably from 40 to 200 g/10 minutes (ASTM D 1238-95, Condition L).

Suitable examples of functionalized polyolefins include QESTRON^{™} KA805A, a maleic anhydride functionalized polypropylene having a MFR of 50 g/10 min.; and QESTRON KA802A, with a MFR of 35 g/10 min; both having a maleic acid content of about 1%, and EXXELOR^{™} PO1020, a maleic anhydride functionalized polypropylene (0.6-0.80% MA) having a MFR greater than 200 g/10 min. (Basell is replacing the trademark QESTRON by the trademark HIFAX^{™}).

The more preferred component (b) is HIFAX KA805A.

The composition preferably comprises from 30 to 50 pbw of component (b).

Component (c)

Suitable plasticizers include plasticizing oils like low aromatic content hydrocarbon oils that are paraffinic or naphthenic in character (carbon aromatic distribution < 5%, preferably < 2%, more preferably 0% as determined according to DIN 51378). Those products are commercially available from the Royal Dutch/Shell Group of companies, like SHELLFLEX^{™}, CATENEX^{™}, and ONDINA^{™} oils. Other oils include KAYDOL^{™} oil from Witco, or TUFFLO^{™} oils from Arco or PRIMOL^{™} oils from EXXON-MOB1L.

Other plasticizers may also be added, like olefin oligomers; low molecular weight polymers (< 30,000 g/mol) like liquid polybutene, liquid polyisoprene copolymers, liquid styrene/isoprene copolymers or liquid hydrogenated styrene/conjugated diene copolymers; vegetable oils and their derivatives; or paraffin and microcrystalline waxes.

Plasticizers such as paraffinic oils which may be used in the composition according to the present invention should be capable of being melt processed with other components of the composition without degrading.

More preferably the plasticizer represents a plasticizing oil selected from paraffinic or naphtenic oils, in an amount of from 0 to 80 pbw, relative to 100 pbw of component (a).

Component (d)

It is known in the art that various other components can be added to manage the overall economics of the overmolded article such as fillers. Examples of such fillers include DURCAL^{™} 5, a calcium carbonate from Omya, and ANKERMAG^{™} B20, a magnesium oxide from Magnifin. These fillers are typically used in combination with filler deactivators, such as EPON^{™} 1004, an epoxy compound. These fillers may be present in an amount of from 0 to 200 parts by weight, preferably from 50 to 150 pbw per 100 parts of component (a). (The amount of filler deactivator is typically about 1 to 2% by weight of the filler).

Antioxidants

Antioxidants and other stabilizing ingredients can also be added to protect the composition of the present invention from degradation induced by heat, light and processing or during storage.

Several types of antioxidants can be used, either primary antioxidants like hindered phenols or secondary antioxidants like phosphite derivatives or blends thereof. Particularly preferred is IRGANOX^{™} 1010 alone or in combination with IRGANOX PS800. These antioxidants are generally present in an amount within the range of 0.01 to 4, preferably 0.1 to 1 pbw per 100 parts of component (a).

Component (f)

As is known from US 5723543 --. , the block copolymer compositions preferably contain a polar engineering thermoplast. Suitable polar engineering thermoplasts which can be applied as component (f) may be selected from polyamide such as NYLON 6,6 (PA-6,6), NYLON 6 (PA-6), polycarbonates (PC), polymethylmethacrylate (PMMA) and polyester derived from an aromatic acid such as polyethylenetherephthalate (PET), polypropyleneterephthalate (PPT) and polybutyleneterephthalate (PBT) or any combination thereof. Such engineering thermoplasts can optionally be mixed with polyurethane resins such as VANDAR^{™}, polycarbonates and modified polycarbonates. Polycarbonates are the preferred polar engineering thermoplasts.

Additional auxiliaries

Other ingredients which do not affect the essential elastomeric characteristics of the composition may be present as well. Such ingredients include pigments, fragrances, flame retardants, surfactants, waxes, flow promoters such as for instance KRISTALLEX^{™} 3115, solvents, and materials added to enhance processability and pellet handling of the composition.

Preparation of the composition

No particular limitation is imposed on the preparation process of the compositions according to the present invention.

Therefore, there may be used any process such as a twin-screw extruder thereby obtaining an intimate solution of the composition aimed at.

Use of the composition

The composition according to the present invention is used for overmolding onto hard substrates, grips, medical articles like medical tubing and other rubbery articles, in particular onto a polar substrate. This technology is known and described in for instance WO 98/01506.

More in particular the composition shows an improved balance of high temperature properties when overmolded onto PA-6, i.e. cohesive failure with high bond strength in combination with a compression set of at most 40% measured at 70°C/24 hours.

The present invention will hereinafter be described more specifically by reference to the following examples and comparative examples, however without restricting its scope to these specific embodiments.

Incidentally, all designations of "parts" and "%" as will be used in the following examples mean parts by weight and wt% unless expressly noted otherwise.

Examples

Details of the ingredients used in the examples can be found in Table 1.

**Table 1**

| Trade name | Details (Supplier) |
|---|---|
| SEBS-1 | styrene-ethylene/butylene-styrene block copolymer, linear, MW of ∼190,000, 31% PSC |
| SEBS-2 | S-E/B-S, block copolymer, linear, about 70% 1,2 BD, MW of ~290,000, 32% PSC |
| F-SEBS | S-E/B-S, block copolymer, 1.7% w maleic anhydride (MA) func- tionalized, linear, MW of ~80,000, 30% PSC |
| PA-6 | Polyamide 6 (ULTRAMID^{™} B3, BASF) |
| PC | Polycarbonate (LEXAN^{™} 141R, GE Plastics) |
| LOTADER^{™} | COMPARATIVE: ethylene/acrylic ester/maleic anhydride |
| 3200 | terpolymer, 9% acrylic ester and MA comonomers, AtoFina |
| QESTRON KA | PP copolymer, MA functionalised (1%), MFR (230°C/ 2.16 kg) = |
| 805A | 50 g/10 min, Basell (now HIFAX^{™} KA 805A) |
| ADMER^{™} QF551E | COMPARATIVE adhesive resin', PP type, NIFF (230°C/ 2.16 kg) = 6 g/10 min, Mitsui Chemicals |
| EXXELOR^{™} PO 1020 | MA functionalised PP homopolymer, MFR (230°C/2.16 kg) > 200 g/10 min, ExxonMobil MA level is typically in the range of 0.5 to 1.0 wt% |
| PRIMOL^{™} 352 | paraffinic oil, Esso |
| KRISTALLEX ^{™} 3115 | hydrocarbon resin, R&B softening point = 115°C, Hercules |
| CaCO₃ | calcium carbonate (DURCAL^{™} 5, Omya) |
| EPON^{™} 1004 | epoxy resin, Shell |
| AO | 50/50 w/w blend of IRGANOX^{™} 1010, a hindered phenol, primary anti-oxidant, IRGANOX PS800 a secondary antioxidant, both from Ciba-Geigy |

Prior to use, the ingredients (PA-6, styrenic block copolymer) are dried overnight at 70°C or for 4 hours at 80°C in a vacuum oven.

Compositions for the preparation of overmolded substrates were prepared on a 25 mm, co-rotating twin screw extruder. Overmolding is done on a Demag dual barrel injection molding machine, equipped with an Axxicon mold. PA-6 plaques with thickness of 2 mm are molded, then the softer material is overmolded onto it.

Test methods
- Melt flow rate (MFR): ASTM D 1238-95 (Condition L: 230°C, 2.16 kg)
- The adhesion between the hard and soft plaques is determined by performing the Renault D41 1916 test on a Zwick mechanical tester. The soft plaque is cut to a width of 15 mm. The PA-6 plate is inserted into a moving clamp while the SEBS based composition is clamped into a fixed part, with an angle of 90°. A test speed of 100 mm/minute is used and the distance between the upper part of the rigid plate and the clamp is of 50 mm.
- The same 2 mm thick plaques are used for determination of the hardness (ISO 868) of the compositions.
- Samples for measurements of the compression set are prepared using a Battenfeld injection moulder.
- Compression set was measured for 24 hours at 70°C, following method ISO 815.

RESULTS AND DISCUSSION

The relevant physical properties of the compositions have been specified in Tables 2 and 3. It will be appreciated from the results in Table 3 that compositions E1 and E2, provide high temperature performance, that is lacking in the comparative samples.

For adhesion onto polar substrates like PA-6, polarity is needed. To simulate compositions as might be formulated by commercial compounders a number of SEBS/F-SEBS compositions were developed for overmolding onto PA-6. The compression set performances thereof were found to be poor.

A 40/60 w/w SEBS/F-SEBS based composition, based on EP 0832931 --. exhibiting the best adhesion onto PA-6 was taken as starting point for further developments. This composition is coded A.

As can be seen from Table 2, replacing SEBS-1/F-SEBS in formulation A by SEBS-2 (formulation C1) decreases hardness and improves compression set at 70°C from 96% to 60-65%. However, adhesion on PA-6 is lost.

Formulation C2 comprises LOTADER, whose degree of functionality is too high. Formulation C3 comprises ADMER, whose MFR is too low. The results of the compositions so obtained are not good enough.

For formulations based on SEBS-2/PC/filler, the QESTRON and EXXELOR PO 1020 grades are providing compositions with compression set values of 30-35% combined with adhesion to PA-6. Composition E2, containing QESTRON KA 805A, is giving a cohesive failure with high peeling force (- 20 N/2mm) when performing the Renault test on PA-6. This is the best composition developed in this study. This QESTRON grade combines polarity and excellent flow. Note that the use of this grade at 20 pbw, Comparative formulation C4, does not provide adequate adhesion.

SUMMARY AND CONCLUSIONS

From the compositions evaluated for overmolding onto PA-6, it can be concluded that:

Compositions comprising functionalized hydrogenated block copolymers are not meeting the compression set requirements of the automotive industry.

Replacement of F-SEBS by unfunctionalized, high MW SEBS-2 improves compression set but gives compositions lacking adhesion on PA-6.

The use of EXXELOR PO 1020 (a functionalized PP homopolymer), in combination with SEBS-2 is leading to formulations with adequate compression set and some level of adhesion to PA-6. This composition E1 could be useful for applications where compression set is important.

A cohesive failure mode with high bond strength (- 20 N) is obtained with a formulation containing SEBS-2 and QUESTRON KA805A (a functionalized PP copolymer). A compression set of 35% is measured at 70°C/24h. This formulation thus meets the requirements set for this project.

**Table 2, comparative examples**

| **Formulations** | **A** | **C1** | **C2** | **C3** |
|---|---|---|---|---|
| SEBS-1 | 40 | - | - | - |
| SEBS-2 | - | 100 | 100 | 100 |
| F-SEBS | 60 | - | - | - |
| PRIMOL 352 | 67 | 67 | 67 | 67 |
| CaCo₃ | 100 | 100 | 100 | 100 |
| EPON 1004 | 1 | 1 | 1 | 1 |
| LEXAN 141 R | 20 | 20 | 20 | 20 |
| KRISSTALLEX 3115 | 20 | 20 | - | - |
| LOTADER 3200 | - | - | 30 | - |
| ADMER QF551E | - | - | - | 30 |
| AO | 0.4 | 0.4 | 0.4 | 0.4 |

| **Properties:** | | | | |
|---|---|---|---|---|
| Hardness, Shore, A,0 s | 55 | 48 | 63 | 65 |
| Compression set (70°C/24 h)% | 96 | 60-65 | 45 | 39 |

| **Adhesion onto PA-6:** | | | | |
|---|---|---|---|---|
| Average peeling force, N | 16 | 4 | 2 | No |
| F. max., N | 22 | 5 | 2 | Adh. |

**Table 3, E1 and E2 according to the invention**

| **Formulations:** | **E1** | **C4** | **E2** |
|---|---|---|---|
| SEBS-1 | - | - | - |
| SEBS-2 | 100 | 100 | 100 |
| F-SEBS | - | - | - |
| PRIMOL 352 | 67 | 67 | 67 |
| CaCO₃ | 100 | 100 | 100 |
| EPON 1004 | 1 | 1 | 1 |
| LEXAN 141 R | 20 | 20 | 20 |
| EXXELOR PO 1020 | 30 | - | - |
| QESTRON KA 805A | - | 20 | 30 |
| AO | 0.4 | 0.4 | 0.4 |

| **Properties:** | | | |
|---|---|---|---|
| Hardness, Shore A,0 s | 71 | 60 | 65 |
| Compression set (70°C/24 h)% | 39 | 44 | 35 |

| **Adhesion onto PA-6:** | | | |
|---|---|---|---|
| Average peeling force, N | 13 | 5 | 19 |
| F. max., N | 16 | 6 | 21 |

## Claims

1. A hydrogenated styrenic block copolymer composition for overmolding onto a polar substrate, comprising:
a) 100 pbw of a hydrogenated styrenic block copolymer having at least two resinous endblocks of polymerized monovinyl arene and an elastomeric midblock of polymerized and subsequently hydrogenated conjugated diene or dienes,
b) from 25 to 60 pbw of a functionalized polyolefin, and optionally
c) from 0 to 100 pbw of a plasticizer,
d) from 0 to 200 pbw of one or more fillers and filler deactivators,
e) from 0 to 2 pbw of antioxidants,
f) from 0 to 100 pbw of a polar engineering thermoplast,
**wherein** component (a) is a linear hydrogenated styrenic block copolymer having an apparent molecular weight in the range of from 200,000 to 500,000 or a radial hydrogenated styrenic block copolymer having an apparent molecular weight in the range of from n times 100,000 to 250,000, n equals the number of polymer arms, and component (a) has a content of hydrogenated 1,2-polymerized conjugated dienes (vinyl content) of greater than 40% and a content of poly(monovinyl arene) in the range of from 20 to 50%,and component (b) is an acid, anhydride or ester functionalized polyolefin having a grafting level of 0.5 to 5%w and a melt flow rate (MFR, ASTM D 1238-95 at Condition L) equal to or greater than 20 g/10 minutes.

2. A composition as claimed in claim 1, wherein the component (b) has an MFR of 35-300 g/10 minutes.

3. A composition as claimed in claim 1, wherein the component (b) has an MFR of 40-200 g/10 minutes.

4. A process for preparing a composite material comprising overmolding a hydrogenated styrenic block copolymer as claimed in any one of claims 1 to 3 onto a polar substrate.

5. A process as claimed in claim 4, wherein the polar substrate is a polyamide.

6. A plastic article comprising a hydrogenated styrenic block copolymer as claimed in any one of claims 1 to 3, overmolded onto a polar substrate.

7. A plastic article as claimed in claim 6, wherein the polar substrate is a polyamide.

## Patentansprüche

1. Hydrierte Styrol - Blockcopolymer - Zusammensetzung zum Überformen auf ein polares Substrat, umfassend:
a) 100 Gewichtsteile eines hydrierten Styrol - Blockcopolymers, das mindestens zwei harzartige Endblöcke aus polymerisiertem Monovinylaren und einen elastomeren Mittelblock aus polymerisiertem und anschließend hydriertem konjugierten Dien oder Dienen hat,
b) 25 bis 60 Gewichtsteile eines funktionalisierten Polyolefins, und wahlweise
c) 0 bis 100 Gewichtsteile eines Weichmachers,
d) 0 bis 200 Gewichtsteile eines oder mehrerer Füllstoffe und Füllstoffdeaktivatoren,
e) 0 bis 2 Gewichtsteile Antioxidationsmittel,
f) 0 bis 100 Gewichtsteile eines polaren technischen Thermoplasten,
**wobei** Komponente (a) ein lineares hydriertes Styrol - Blockcopolymer ist, das ein scheinbares Molekulargewicht (apparent molecular weight) im Bereich von 200.000 bis 500.000 hat, oder ein radiales hydriertes Styrol - Blockcopolymer ist, das ein scheinbares Molekulargewicht im Bereich von n mal 100.000 bis 250.000 hat, n der Zahl der Polymerarme entspricht, und Komponente (a) einen Anteil an hydrierten, 1,2-polymerisierten, konjugierten Dienen (Vinylanteil) von mehr als 40 % hat und einen Anteil an Poly(monovinylaren) im Bereich von 20 bis 50 % hat, und Komponente (b) ein Säure-, Anhydrid- oder Ester-funktionalisiertes Polyolefin ist, das einen Pfropfungsgrad von 0,5 bis 5 Gew.-%, und eine Schmelzflussrate (Melt Flow Rate, MFR, ASTM D 1238-95 bei Bedingung L) von gleich oder mehr als 20 g/10 Minuten hat.

2. Zusammensetzung wie in Anspruch 1 beansprucht, wobei die Komponente (b) eine MFR von 35 - 300 g/10 Minuten hat.

3. Zusammensetzung wie in Anspruch 1 beansprucht, wobei die Komponente (b) eine MFR von 40 - 200 g/10 Minuten hat.

4. Verfahren zum Herstellen eines Verbundmaterials, umfassend das Überformen eines hydrierten Styrol - Blockcopolymers, wie in einem der Ansprüche 1 bis 3 beansprucht, auf ein polares Substrat.

5. Verfahren wie in Anspruch 4 beansprucht, wobei das polare Substrat ein Polyamid ist.

6. Kunststoffartikel, umfassend ein hydriertes Styrol - Blockcopolymer, wie in einem der Ansprüche 1 bis 3 beansprucht, das auf ein polares Substrat überformt ist.

7. Kunststoffartikel wie in Anspruch 6 beansprucht, wobei das polare Substrat ein Polyamid ist.

## Revendications

1. Composition de copolymère séquencé hydrogéné à base de styrène pour le surmoulage sur un substrat polaire, comprenant :
a) 100 parties en poids de copolymère séquencé hydrogéné à base de styrène ayant au moins deux blocs terminaux résineux d'arène de monovinyle polymérisé et un bloc central élastomère de diène ou diènes polymérisé(s) puis hydrogéné(s),
b) de 25 à 60 parties en poids d'une polyoléfine fonctionnalisée, et éventuellement
c) de 0 à 100 parties en poids d'un plastifiant,
d) de 0 à 200 parties en poids d'un ou plusieurs charges et désactivateurs de charge,
e) de 0 à 2 parties en poids d'antioxydants,
f) de 0 à 100 parties en poids d'un thermoplastique d'ingénierie polaire,
dans laquelle le composant (a) est un copolymère séquencé hydrogéné linéaire à base de styrène ayant un poids moléculaire apparent dans la plage de 200000 à 500000 ou un copolymère séquence hydrogéné radial à base de styrène ayant un poids moléculaire apparent dans la plage de n fois de 100000 à 250000, n représentant le nombre de ramifications du polymère, et le composant (a) a une teneur en diènes conjugués hydrogénés polymérisés en positions 1 et 2 (teneur en vinyle) supérieure à 40 % et une teneur en poly(arène monovinylique) dans la plage de 20 à 50 %, et le composant (b) est un acide, un anhydride, ou une oléfine fonctionnalisée par un ester ayant un taux de greffage de 0,5 à 5 % en poids et un indice de fluage (MFR, ASTM D 1238-95 à la condition L) supérieur ou égal à 20 g/10 minutes.

2. Composition selon la revendication 1, dans laquelle le composant (b) a un MFR de 35 à 300 g/ 10 minutes.

3. Composition selon la revendication 1, dans laquelle le composant (b) a un MFR de 40 à 200 g/ 10 minutes.

4. Procédé de préparation d'un matériau composite comprenant le surmoulage d'un copolymère séquencé hydrogéné à base de styrène selon l'une quelconque des revendications 1 à 3 sur un substrat polaire.

5. Procédé selon la revendication 4, dans lequel le substrat polaire est un polyamide.

6. Article plastique comprenant un copolymère séquencé hydrogéné à base de styrène selon l'une quelconque des revendications 1 à 3, surmoulé sur un substrat polaire.

7. Article plastique selon la revendication 6, dans lequel le substrat polaire est un polyamide.
